# EUROPÄISCHE PATENTANMELDUNG

(11) **EP 2 418 613 A1**
(43) Veröffentlichungstag der Anmeldung: **15.02.2012**
(21) Anmeldenummer: 10172350.0
(22) Anmeldetag: 10.08.2010
(51) Int. Cl.: G06Q 30/00

(54) **System zur Implementierung und/oder zur Erweiterung eines Point-of-Service-Systems und Verfahren zum Betreiben des Systems**

(71) Anmelder: Quipos Solutions GmbH, 5020 Salzburg (AT)
(72) Erfinder: Aigner, Roland, 5400, Hallein/Rif (AT); Karpf, Karl-Heinz, 5232, Kirchberg (AT)
(74) Vertreter: Karakatsanis, Georgios

(57) **Zusammenfassung**

Es wird ein System (1) zur Implementierung und/oder zur Erweiterung eines Point-of-Service-Systems vorgeschlagen, welches zumindest einen zentralen Server (Enabler) (2), und eine Mehrzahl von mit dem Enabler (2) drahtlos oder über ein Netzwerkkabel verbindbaren Mobilteilen (3, 4, 5, 6, 7) umfasst, wobei der zumindest eine Enabler (2) eine Schnittstelle zu einer Datenbank (8) mindestens eines zu implementierenden bzw. zu erweiternden Point-of-Service-Systems (9) aufweist, wobei vom Enabler (2) von der Datenbank (8) des zu implementierenden bzw. des zu erweiternden Point-of-Service-Systems (9) lediglich die Tabellen importiert, an die Mobilteile (3, 4, 5, 6, 7) weitergeleitet und synchronisiert werden, welche von den Mobilteilen (3, 4, 5, 6, 7) zum Betrieb des Point-of-Service-Systems benötigt bzw. mittels der Mobilteile (3, 4, 5, 6, 7) eingegeben werden, wobei die Synchronisationsintervalle von der Brisanz der Daten, d.h. von der Notwendigkeit der Verfügbarkeit der Daten in der Datenbank (8) des zu implementierenden bzw. zu erweiternden Point-of-Service-Systems zur Gewährleistung eines optimalen Betriebs des Point-of-Service-Systems abhängig sind.

## Beschreibung

Die vorliegende Erfindung bezieht sich auf ein System zur Implementierung und/oder zur Erweiterung eines Point-of-Service-Systems gemäß dem Oberbegriff des Patentanspruchs 1. Des Weiteren bezieht sich die Erfindung auf ein Verfahren zur Implementierung und/oder zur Erweiterung eines Point-of-Service-Systems, insbesondere auf ein Verfahren zum Betreiben des erfindungsgemäßen Systems.

Als Point-of-Service-System im Sinne der Erfindung wird ein rechnergestütztes System definiert, mittels dessen eine Dienstleistung von einem Endkunden in Anspruch genommen wird; Point-of-Service-Systeme werden beispielsweise in Stadien (zur Zutrittskontrolle oder zum Getränkeverkauf), Messen oder auch in der Gastronomie implementiert. Point-of-Service Systeme können auch in Hotels, Clubs, Resorts, Wellnessbereichen, Strandarealen etc. implementiert werden, wodurch beispielsweise ein Funkbonieren ermöglicht wird.

Um eine große Flexibilität zu ermöglichen, ist es besonders vorteilhaft, wenn Point-of-Service-Systeme eine größtmögliche Mobilität gewährleisten.

In der Regel umfassen derartige Point-of-Service-Systeme Mobilteile, welche mit einem zentralen Server verbunden sind, wobei in diesem Zusammenhang bekannt ist, als Mobilteile PDA-Geräte einzusetzen, was jedoch die Komplexität des Gesamtsystems erhöht; aus diesen Gründen ist die maximale Anzahl der zur Verfügung stehenden PDA-Geräte begrenzt.

Ferner sind als offene Systeme ausgeführte Point-of-Service-Systeme bekannt, bei denen von einem zentralen Rechner steuerbare Mobilteile (Hand Helds) vorgesehen sind. Derartige Lösungen basieren auf einer "Thin Client-Server" -Architektur, bei der die Mobilteile als "Fernbedienung" eines zentralen Rechners dienen. In nachteiliger Weise sind derartige Systeme nicht um Schnittstellen erweiterbar, welche beispielsweise im Stadionbereich erforderlich sind, um u.a. das Anbieten von unterschiedlichen Dienstleistungen mittels desselben Systems zu ermöglichen.

Des Weiteren sind geschlossene Point-of-Service-Systeme bekannt, bei denen spezielle Mobilteile verwendet werden, welche lediglich zu einem bestimmten Zweck einsetzbar sind; derartige Point-of-Service-Systeme sind fast ausschließlich im Gastronomiebereich einsetzbar und sind nicht beliebig erweiterbar.

Aus dem Stand der Technik ist auch bekannt, bei Point-of-Service Systemen zur Kommunikation mit einem zentralen Server Tablett-PCs zu verwenden, was jedoch aufgrund der Größe und des Gewichtes von Tablett-PCs, die als Mobilteile verwendet werden, in Nachteilen hinsichtlich der Flexibilität und der Ergonomie des Systems resultieren.

Der vorliegenden Erfindung liegt die Aufgabe zugrunde, ein System zur Implementierung und/oder zur Erweiterung eines Point-of-Service-Systems anzugeben, welches eine hohe Flexibilität aufweist und sich als mobile Lösung eignet.

Des Weiteren soll das erfindungsgemäße System eine einfache Inbetriebnahme und hohe Individualisierungsmöglichkeiten gewährleisten und eine gesicherte und manipulationsgeschützte Datenübermittlung garantieren.

Dadurch soll ein Point-of-Service-System auf einfache Weise implementiert werden sowie ein bereits bestehendes Point-of-Service-System einfach und kostengünstig erweitert werden können.

Ein weiteres Ziel der Erfindung ist es, ein Verfahren zur Implementierung und/oder zur Erweiterung eines Point-of-Service-Systems, insbesondere ein Verfahren zum Betreiben eines erfindungsgemäßen Systems zur Implementierung und/oder zur Erweiterung eines Point-of-Service-Systems anzugeben.

Diese Aufgabe wird für ein System durch die Merkmale des Patentanspruchs 1 gelöst. Ein Verfahren zur Implementierung und/oder zur Erweiterung eines Point-of-Service-Systems, insbesondere ein Verfahren zum Betreiben des erfindungsgemäßen Systems ist Gegenstand des Anspruchs 9. Erfindungsgemäße Ausgestaltungen und Vorteile gehen aus den entsprechenden Unteransprüchen hervor.

Demnach wird ein System zur Implementierung und/oder zur Erweiterung eines Point-of-Service-Systems vorgeschlagen, umfassend zumindest einen zentralen Server, im Folgenden Enabler genannt, und eine Mehrzahl von mit dem Enabler drahtlos oder über ein Netzwerkkabel verbindbaren Mobilteilen, wobei der zumindest eine Enabler eine Schnittstelle zu einer Datenbank mindestens eines zu implementierenden bzw. zu erweiternden Point-of-Service-Systems aufweist, wobei vom Enabler lediglich die für den Betrieb des Point-of-Service-Systems relevanten Daten bzw. Tabellen aus der Datenbank des zu implementierenden bzw. des zu erweiternden Point-of-Service-Systems importiert, an die Mobilteile weitergeleitet und synchronisiert werden; für den Betrieb des Point-of-Service-Systems nicht relevante und in der Datenbank des Point-of-Service-Systems gespeicherte Daten, wie beispielsweise Kundenanschriften und Statistiken werden in vorteilhafter Weise vom Enabler nicht importiert und auch nicht synchronisiert. Die Mobilteile dienen der Interaktion des Point-of-Service -Systems mit den Endkunden.

Insbesondere werden vom Enabler von der Datenbank des zu implementierenden bzw. des zu erweiternden Point-of-Service-Systems lediglich die Tabellen importiert, an die Mobilteile weitergeleitet und synchronisiert, welche von den Mobilteilen zum Betrieb des Point-of-Service-Systems benötigt bzw. mittels der Mobilteile eingegeben werden.

Durch den zumindest einen Enabler wird demnach das System zur Implementierung und/oder zur Erweiterung eines Point-of-Service-Systems mit der Datenbank des zu implementierenden bzw. des zu erweiternden Point-of-Service-Systems verbunden, wobei der Enabler auch der Synchronisation der Daten zwischen den mit dem Enabler drahtlos verbindbaren Mobilteilen und der Datenbank des zu implementierenden bzw. des zu erweiternden Point-of-Service-Systems dient.

In vorteilhafter Weise ist der Enabler als skalierbarer Rechner bzw. Server ausgeführt, um eine Anpassung an unterschiedliche Anforderungen zu ermöglichen.

Hierbei kann der zumindest eine Enabler mehrere Schnittstellen zu unterschiedlichen Datenbanken, die jeweils einem zu implementierenden bzw. zu erweiternden Point-of-Service-System zugeordnet sind, aufweisen. Beispielsweise ist es möglich, zu Beginn einer Veranstaltung die Datenbank eines Zutrittskontrollsystems zu verwenden, mittels der Mobilteile den Zutritt durch Auswertung von Zugangsberechtigungen zu kontrollieren und die entsprechenden Daten über den Enabler mit der Datenbank des Zutrittskontrollsystems zu synchronisieren, wobei anschließend die Datenbank eines "in-Seat" Catering-Systems verwendet werden kann, um als Service die Verpflegung der Gäste der Veranstaltung anzubieten.

Es ist auch möglich, dass der Enabler gleichzeitig mit mehreren Datenbanken verbunden ist, die jeweils unterschiedlichen Point-of-Service-Systemen entsprechen, wobei die Mobilteile zwischen den Point-of-Service-Systemen aufgeteilt sind oder wobei der Bediener des jeweiligen Mobilteils je nach Bedarf zwischen den unterschiedlichen Point-of-Service-Systemen umschalten kann.

Die Verbindung zwischen dem zumindest einen Enabler und der Datenbank des Point-of-Service-Systems kann beispielsweise über Funk, drahtgebunden in einem Netzwerk oder über das Internet erfolgen.

Durch die erfindungsgemäße Konzeption wird mit lediglich einem Endsystem, umfassend mindestens einen Enabler und eine Mehrzahl von dem zumindest einen Enabler zugeordneten Mobilteilen die Verbindung mit zumindest einer Datenbank eines Point-of-Service-Systems gewährleistet. Dadurch wird die Komplexität reduziert, wobei die Kosten für die Implementierung bzw. Erweiterung eines Point-of-Service-Systems reduziert werden.

Die gemäß der Erfindung vorgesehenen Mobilteile weisen eine CPU, Speichermittel sowie ein Betriebssystem und vorzugsweise eine als Touch-Screen ausgeführte Anzeigevorrichtung auf, über die relevante Daten eingegeben werden können. Die Mobilteile sind mit dem zumindest einen Enabler drahtlos oder über ein Netzwerkkabel verbindbar, wobei die auf jedes Mobilteil übertragenen bzw. zu übertragenden Daten vom Enabler verwaltet werden. Insbesondere werden nur die zum Betrieb eines Point-of-Service-Systems benötigten Daten bzw. Tabellen aus der Datenbank des zu implementierenden bzw. zu erweiternden Point-of-Service-Systems an die jeweiligen Mobilteile weitergeleitet, wobei die Synchronisation der Daten mit der Datenbank des jeweiligen Point-of-Service-Systems vom Enabler verwaltet wird.

Beispielsweise werden für den Fall eines Point-of-Service-Systems zur Zutrittskontrolle, dessen Datenbank hunderte Datenbanktabellen umfasst, pro Endkunden lediglich vier Daten in einer Tabelle benötigt (User_ID, Event_ID, Sitz/Sektor, Zutritt erfolgt oder nicht), wobei lediglich nur eine einzelne Entität mit der Datenbank des Point-of-Service-Systems synchronisiert werden muss ("Zutritt erfolgt oder nicht").

Die Synchronisation der Daten, die über die Mobilteile eingegeben werden, beispielsweise für den Fall eines Point-of-Service-Systems zur Zutrittskontrolle der Entität "Zutritt erfolgt oder nicht", mit der Datenbank des zu implementierenden bzw. des zu erweiternden Point-of-Service-Systems wird vom Enabler verwaltet, wobei die Dynamik der Synchronisierung, (d.h. die Synchronisationsintervalle) von der Brisanz der Daten, d.h. von der Notwendigkeit der Verfügbarkeit der Daten in der Datenbank des zu implementierenden bzw. zu erweiternden Point-of-Service-Systems zur Gewährleistung eines optimalen Betriebs des Point-of-Service-Systems abhängig ist.

Beispielsweise kann bei einem Point-of-Service-System zur Zutrittskontrolle die Synchronisierung der Daten alle fünf Minuten erfolgen, wobei bei einem Point-of-Service-System für die Gastronomie die Synchronisierung der Daten in wesentlich kürzeren Intervallen erfolgt. Um die zu übertragende Datenmenge während des Betriebs eines Point-of-Service-Systems zu reduzieren, kann in vorteilhafter Weise vorgesehen sein, dass Daten, welche für den aktuellen Betrieb des Systems nicht benötigt werden, beispielsweise Daten über verkaufte Fanartikel in einem Stadion, erst nach Beendigung des Betriebs des Point-of-Service-Systems für die Endkunden synchronisiert werden. Die Daten werden bis zur Synchronisierung in den jeweiligen Mobilteilen oder im Enabler zwischengespeichert.

Gemäß der Erfindung können die Mobilteile des Systems modular aufbaubar ausgeführt sein, um auf diese Weise den Anforderungen unterschiedlicher Point-of-Service-Systeme zu genügen. Die Mobilteile können beispielsweise ein RFID- bzw. NFC-Modul zum Auslesen von Zutrittsberechtigungen, ein ein- oder zweidimensionales Barcode-Modul, ein Bluetooth-Modul zur Kommunikation mit Druckern und/oder Signalgebern, einen USB-Anschluss, einen Magnetkartenleser und/oder zumindest einen Biometriesensor aufweisen.

Die unterschiedlichen Module sind vorzugsweise in der Unterschale der Mobilteile angeordnet bzw. anordenbar, so dass durch Änderung der Unterschale in Abhängigkeit der Anforderungen der Point-of-Service-Systeme die entsprechenden Module zur Verfügung gestellt werden können. Beispielsweise können zum Zweck der Implementierung und/oder Erweiterung eines Point-of-Service-Systems zur Zutrittskontrolle ein RFID- bzw. NFC-Modul und/oder ein Magnetkartenleser vorgesehen sein.

Die Verbindung der Mobilteile des Systems mit dem Enabler erfolgt vorzugsweise über eine vom Enabler verwaltete Funk-Infrastruktur, welche als WLAN und/oder GPRS/3G Infrastruktur ausgeführt sein kann. Des Weiteren ist es möglich, als Funk-Infrastruktur eine, in einem ISM Band operierende Infrastruktur vorzusehen, wobei alternativ zu einer ISM Band Frequenz jedes weitere geeignete Frequenzband verwendet werden kann.

Für den Fall, dass eine WLAN Infrastruktur verwendet wird, sind Access-Points vorgesehen, welche vorzugsweise unter dem Open-Source-Betriebssystem Linux operieren, wobei in die Access-Points eine Verwaltungsschnittstelle integriert sein kann, welche eine Verwaltung durch den Enabler ermöglicht.

Für den Fall einer GPRS/3G Funkinfrastruktur wird erfindungsgemäß vorgeschlagen, einen sogenannten Match-Making-Server zu betreiben, welcher über das Internet ein Routing des Mobilteils zu einem Enabler ermöglicht. Hierbei melden sich die Mobilteile am Match-Making-Server an und teilen während der Anmeldeprozedur den Match-Making-Server eine Identifizierung mit, wobei bei einer gültigen Identifizierung der Match-Making-Server die Internet-Enabler-Adresse des jeweiligen Enablers an die Mobilteile weiterleitet, wodurch die Mobilteile mit dem Enabler direkt kommunizieren können.

Alternativ dazu ist es möglich, dass die Kommunikation zwischen den Mobilteilen und dem Enabler über einen im Internet abrufbaren speziellen Enabler ("SuperEnabier") erfolgt, welcher die Daten zu einem Enabler eines Point-of-Service-Systems, der vor Ort installiert sein kann, routet.

Die Softwareumgebung der Mobilteile besteht vorzugsweise aus einem Linux-Betriebssystem, welches eine Applikationsschnittstelle aufweist. Die Applikationsschnittstelle kann beispielsweise eine Android 2.X Schnittstelle sein, welche sämtliche Vorteile einer Performanten Embedded Entwicklung sowie die Vorzüge eines vollwertigen Betriebssystems bei einer sehr stabilen Applikationsschicht aufweist.

Erfindungsgemäß erfolgt die Applikationsentwicklung auf ein Mobilteil dadurch, dass in einem GUI-Designer bestehende Masken für bestimmte Aufgaben modifiziert werden und zu einem Workflow kombiniert werden; hierbei kann es bei bestimmten Anwendungen erforderlich sein, einfache Datenmanipulationen direkt am Mobilteil zu ermöglichen; Voraussetzung hierfür ist die Integration einer Script Engine in das jeweilige Mobilteil.

Gemäß der Erfindung ist der Enabler über ein Datenbank- und Applikationsinterface mit der Datenbank des zu implementierenden bzw. des zu erweiternden Point-of-Service-Systems verbunden, wobei über das Datenbank- und Applikationsinterface und über ein im Enabler installiertes Modul "Enabler-Configuration Service" die Synchronisationsintervalle der Datenbank und weitere Einstellungen vorgenommen werden können. Erfindungsgemäß umfasst der Enabler eine Synchronisations-Engine, welche die Synchronisierung der Daten zwischen den Mobilteilen und der Datenbank des Point-of-Service-Systems übernimmt.

Ferner umfasst der Enabler eine Einstellungsdatenbank (Settings Database), über die die Synchronisationsintervalle, die über das Modul "Enabier-Configuration Service" eingestellt werden sowie die Einstellungen der angeschlossenen Mobilteile verwaltet werden. Auf diese Weise kann ein Mobilteil einfach ersetzt werden, wobei in diesem Fall die erforderlichen Einstellungen des Mobilteils analog zu einem Back-up/Restore Szenario wiederhergestellt werden.

Der Enabler umfasst erfindungsgemäß eine "Device Database", über die die angemeldeten Mobilteile, die Funkinfrastruktur sowie das Finden von Mobilteilen, die sich in einer GPRS/3G Infrastruktur befinden, verwaltet werden. Des Weiteren werden in der "Device Data Base" die Sicherheits Token, Firmware und Scripte gespeichert, um die Verfügbarkeit im Falle eines Updates/Austausches zu gewährleisten.

Die, für die Anzeige und Manipulation der Daten notwendigen Scripte werden in dieser "Device Data Base" genauso verspeichert, wie Benutzerdaten. Somit werden diese Scripte mit den beschriebenen Mechanismen im innert des Systems immer synchron gehalten.

Des Weiteren umfasst der Enabler eine "Internal Database", in der die sicherheitsrelevanten Daten und Einstellungen, wie zum Beispiel Hashes der Schlüssel, Lizenzen für die Nutzung der Mobilteile sowie spezielle Synchronisationseinstellungen gespeichert sind.

Durch die erfindungsgemäße Konzeption wird eine mobile Komplettlösung zur Implementierung und/oder Erweiterung eines Point-of-Service-Systems zur Verfügung gestellt, welche hohe Individuallösungs-Möglichkeiten und ein Maximum an Flexibilität bietet. Durch die Skalierbarkeit des zumindest einen Enablers können Point-of-Service-Systeme implementiert bzw. erweitert werden, die für beliebig große Veranstaltungen geeignet sind.

Im Rahmen des erfindungsgemäßen Verfahrens zur Implementierung und/oder zur Erweiterung eines Point-of-Service-Systems, wird demnach mittels zumindest eines zentralen Servers (Enablers), mit dem mehrere eine CPU, Speichermittel sowie ein Betriebssystem und eine als Touch-Screen ausgeführte Anzeigevorrichtung aufweisende Mobilteile drahtlos verbindbar sind, eine Verbindung zu einer Datenbank mindestens eines zu implementierenden bzw. zu erweiternden Point-of-Service-Systems hergestellt. Wie bereits erläutert, werden vom Enabler lediglich die Tabellen der Datenbank importiert, an die Mobilteile weitergeleitet und synchronisiert, die von den Mobilteilen zum Betrieb des Point-of-Service-Systems benötigt bzw. mittels der Mobilteile eingegeben werden, wobei in vorteilhafter Weise die Synchronisationsintervalle von der Brisanz der Daten, d.h. von der Notwendigkeit der Verfügbarkeit der Daten in der Datenbank des zu implementierenden bzw. zu erweiternden Point-of-Service-Systems zur Gewährleistung eines optimalen Betriebs des Point-of-Service-Systems abhängig sind. Die an jedes Mobilteil übertragenen bzw. zu übertragenden Daten werden vom Enabler verwaltet.

Die Erfindung wird im Folgenden anhand der beigefügten Figuren beispielhaft näher erläutert. Es zeigen:
Fig. 1: Eine Übersichtsdarstellung eines erfindungsgemäßen Systems zur Implementierung und/oder zur Erweiterung eines Point-of-Service-Systems;
Fig.2: Eine Darstellung eines erfindungsgemäßen Systems zur Implementierung und/oder zur Erweiterung eines Point-of-Service-Systems zur Veranschaulichung möglicher Anbindungsmöglichkeiten der Mobilteile;
Fig. 3: Eine Darstellung des inneren Aufbaus des Enablers gemäß der Erfindung; und
Fig. 4: Eine Darstellung der gemäß der Erfindung aus der Datenbank des zu implementierenden oder zu erweiternden Point-of-Service-Systems zu importierenden Daten für den Fall eines Point-of-Service-Systems zur Zutrittskontrolle zur Veranschaulichung geringen auf das erfindungsgemäße System zu übertragenden Datenmenge.

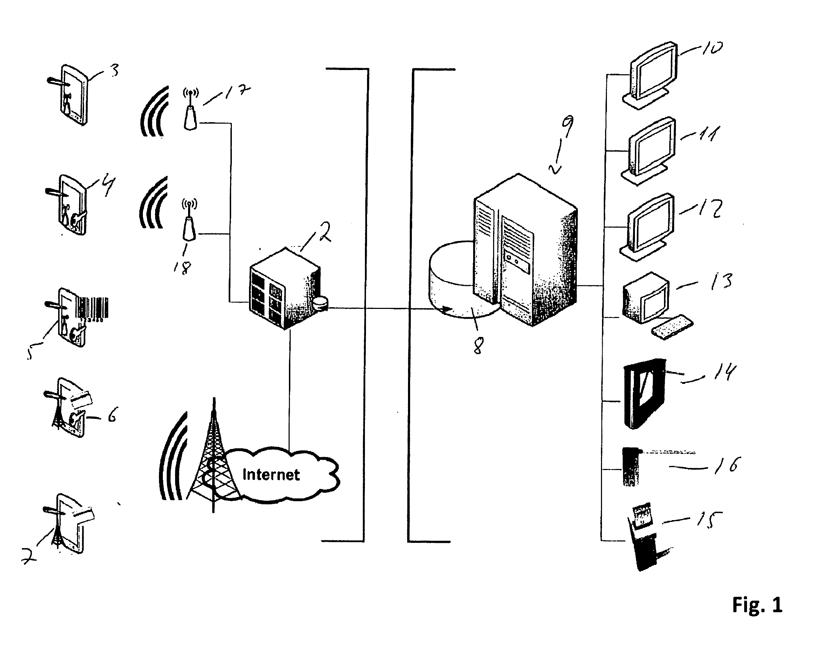

Gemäß der Erfindung und bezugnehmend auf Figur 1 umfasst ein System 1 zur Implementierung und/oder zur Erweiterung eines Point-of-Service-Systems zumindest einen Enabler 2 und eine Mehrzahl von mit dem Enabler 2 drahtlos verbindbaren Mobilteilen 3, 4, 5, 6, 7 wobei der zumindest eine Enabler 2 eine Schnittstelle zu einer Datenbank 8 mindestens eines zu implementierenden bzw. zu erweiternden Point-of-Service-Systems 9 aufweist. Die Mobilteile (alle oder einzelne) können mit dem Enabler auch über ein Netzwerkkabel verbindbar sein. Dies kann beispielsweise dann der Fall sein, wenn die Infrastruktur in einem Stadion es ermöglicht, Mobilteile zu Spielbeginn auf einen dafür vorgesehenen Platz zu hängen und an ein Netzwerkkabel anzuschließen; nach dem Spiel können die Mobilteile wieder abgehängt werden. Diese Mobilteile können z.B. als "Selfordering Terminals" dienen.

Gemäß Figur 1 kann das zu erweiternde Point-of-Service-System 9 mindestens ein POS (Point of Sale) -Terminal 10 einer Hotelrezeption, mindestens ein POS -Terminal 11 eines Gastronomiebetriebs, mindestens ein POS -Terminal 12 eines Shops, eine Back-Office - Infrastruktur 13 sowie Zutrittskontrollvorrichtungen 14, 15, 16 für Personen bzw. Kraftfahrzeuge umfassen, die einem bestehenden, zu erweiternden Point-of Service System entsprechen.

Für den Fall eines zu implementierenden Point-of-Service-Systems 9 wird lediglich die Datenbank 8 verwendet, die mit dem Enabler 2 verbunden ist.

Die Verbindung der Mobilteile 3, 4, 5, 6, 7 des Systems mit dem Enabler 2 erfolgt vorzugsweise über WLAN und/oder GPRS/3G und wird vom Enabler 2 verwaltet. In Figur 1 sind die zur Gewährleistung einer WLAN - Verbindung erforderlichen Access Points mit den Bezugszeichen 17 und 18 versehen. Über diese Access Points 17, 18 erfolgt die Verbindung der Mobilteile 3, 4, 5 mit dem Enabler 2; die Mobilteile 3, 4, 5 können beispielsweise als Mobilteile eines Point- of-Service Systems eines Hotels, eines Gastronomiebetriebs oder eines Stadions ausgeführt sein. Zur Veranschaulichung der Erfindung sind zwei weitere Mobilteile 6, 7 dargestellt, die als Mobilteile eines Point- of-Service Systems in einem Strandareal oder in einem Golfplatz dienen können. Diese Mobilteile 6, 7 sind vorzugsweise über eine GPRS/3G Verbindung zum Internet mit dem Enabler 2 verbindbar.

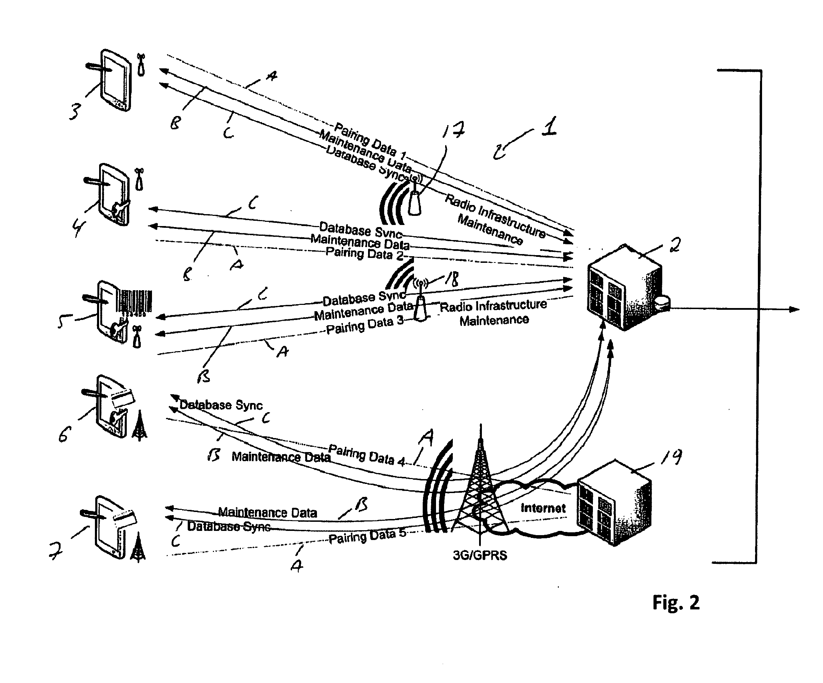

Für den Fall einer GPRS/3G Verbindung zwischen Mobilteilen 6, 7 und dem Enabler 2 wird, wie in Figur 2 dargestellt vorgeschlagen, einen Match-Making-Server 19 zu betreiben, welcher über das Internet ein Routing des jeweiligen Mobilteils 6, 7 zum Enabler 2 ermöglicht. Bei dem in Figur 2 gezeigten Beispiel sind zwischen dem Enabler 2 und den über WLAN mit dem Enabler 2 verbindbaren Mobilteile 3, 4, 5 jeweils drei Verbindungslinien A, B, C dargestellt, wobei Linie A die Verbindung zwischen einem Mobilteil und dem Enabler 2 zum Zweck der Anmeldung des Mobilteils am Enabler, Linie B die Verbindung zwischen einem Mobilteil und dem Enabler 2 zum Zweck der Übertragung von Einstellungsdaten bzw. Wartungsdaten und Linie C die Verbindung zwischen einem Mobilteil und dem Enabler 2 zum Zweck der Datenübertragung zur Synchronisierung der Daten mit der Datenbank des zu implementierenden bzw. zu erweiternden Point-of-Service-Systems 9 darstellt.

Wie aus Figur 2 ersichtlich, verläuft für den Fall einer GPRS/3G Verbindung zwischen Mobilteilen 6, 7 und dem Enabler 2 über einen Match-Making-Server 19 die Verbindungslinie A zwischen den Mobilteilen 6, 7 und dem Match-Making-Server 19; die Linien B und C verlaufen zwischen den Mobilteilen 6, 7 und dem Enabler 2.

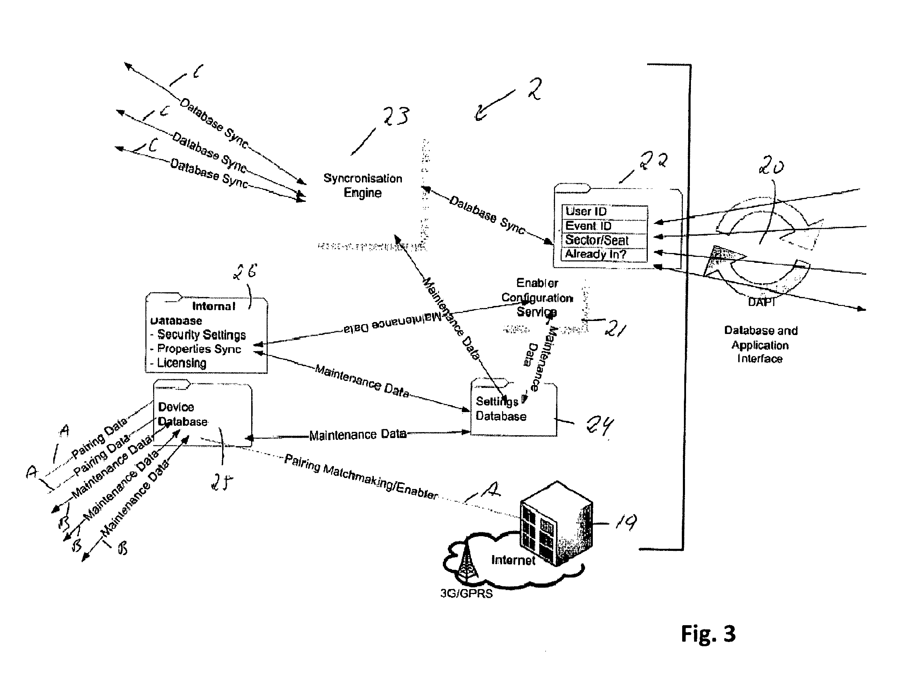

Gegenstand der Figur 3 ist der innere Aufbau eines Enablers 2 gemäß der Erfindung. Bezugnehmend auf Figur 3 umfasst der Enabler 2 ein Datenbank- und Applikationsinterface (DAPI) 20, über das er mit der Datenbank 8 des zu implementierenden bzw. des zu erweiternden Point-of-Service-Systems 9 verbunden ist, wobei über das Datenbank- und Applikationsinterface 20 und über ein im Enabler installiertes Modul "Enabler-Configuration Service" 21 die Synchronisationsintervalle der Datenbank und weitere Einstellungen des Enablers bzw. des erfindungsgemäßen Systems vorgenommen werden. In Figur 3 ist mit dem Bezugszeichen 22 beispielhaft eine Tabelle bezeichnet, welche die zwischen dem erfindungsgemäßen System und der Datenbank des zu implementierenden bzw. zu erweiternden Point-of-Service-Systems zu synchronisierenden Daten umfasst.

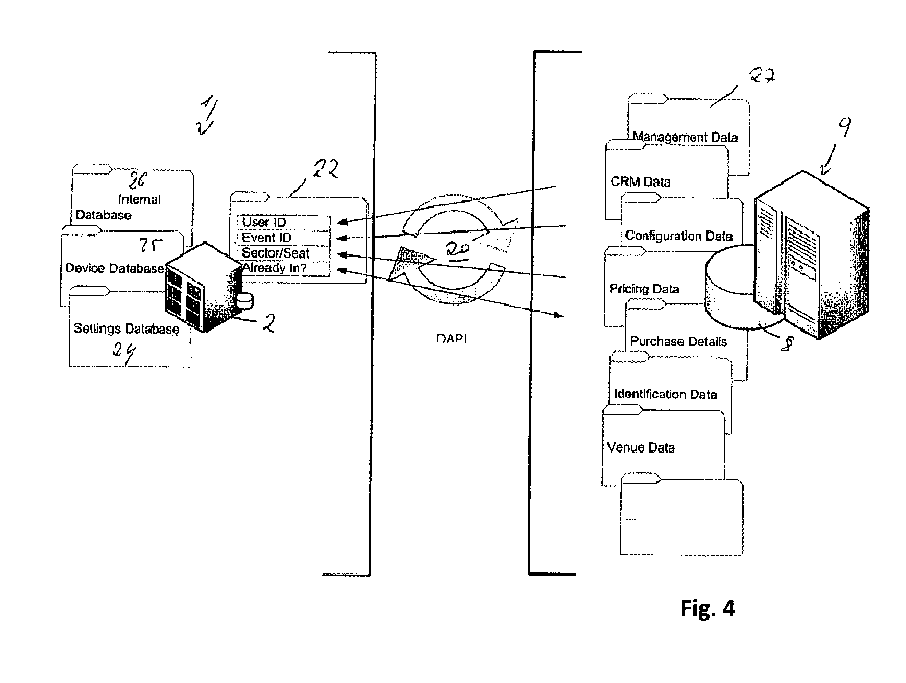

Wie aus Figur 3 ersichtlich umfasst der Enabler eine Synchronisations-Engine 23, welche die Synchronisierung der Daten zwischen den Mobilteilen und der Datenbank des Point-of-Service-Systems übernimmt; die Linien C entsprechen demnach den in Figur 2 gezeigten Linien C. Die Methodik der Synchronisierung ist Gegenstand der Figur 4.

Mit dem Bezugszeichen 24 ist eine Einstellungsdatenbank (Settings Database) bezeichnet, über die die Synchronisationsintervalle, die über das Modul "Enabler-Configuration Service" 21 eingestellt werden sowie die Einstellungen der angeschlossenen Mobilteile und des Enablers bzw. des erfindungsgemäßen Systems verwaltet werden. Durch die in der Einstellungsdatenbank abgelegten Daten kann beispielsweise ein Mobilteil des Systems auf einfache Weise ersetzt werden, wobei in diesem Fall die erforderlichen Einstellungen des Mobilteils analog zu einem Back-up/Restore Szenario wiederhergestellt werden.

Die Einstellungsdatenbank 24 ist demnach zur Übertragung von Einstellungsdaten mit dem Modul "Enabler-Configuration Service" 21 sowie mit der Synchronisations-Engine 23 verbunden.

Des Weiteren umfasst der Enabler eine "Device Database" (Geräte-Datenbank) 25, über die die am Enabler angemeldeten Mobilteile, die Funkinfrastruktur sowie das Finden von Mobilteilen, die sich in einer GPRS/3G Infrastruktur befinden, verwaltet werden. Des Weiteren werden in der "Device Data Base" die Sicherheits Token, Firmware und Scripte gespeichert, um die Verfügbarkeit im Falle eines Updates/Austausches zu gewährleisten; die "Device Database" 25 ist zur Übertragung von Einstellungsdaten mit der Einstellungsdatenbank 24 verbunden. Für den Fall, dass Mobilteile über eine GPRS/3G Verbindung und einen Match-Making-Server 19 mit dem Enabler 2 verbunden sind ist die "Device Database" 25 zur Übertragung der erforderlichen Daten mit dem Match-Making-Server 19 verbunden (vgl. Linien A in Figur 2). Für den Fall, dass die Mobilteile über eine WLAN Verbindung mit dem Enabler 2 verbunden sind, sind diese zur Übertragung der hierfür erforderlichen Verbindungsdaten mit der "Device Database" 25 verbunden (vgl. Linien A in Figur 2). Ferner sind die Mobilteile zur Übertragung von Einstellungsdaten bzw. Wartungsdaten mit der "Device Database" 25 verbunden (vgl. Linien B in Figur 2).

Zum Speichern von sicherheitsrelevanten Daten und Einstellungen, wie zum Beispiel von Hashes der Schlüssel, von Lizenzen für die Nutzung der Mobilteile sowie von speziellen Synchronisationseinstellungen umfasst der Enabler 2 eine "Internal Database" 26, welche zur Übertragung der erforderlichen Daten mit der Einstellungsdatenbank 24 und mit dem Modul "Enabler-Configuration Service" 21 verbunden ist. Gemäß der Erfindung können die zur Benutzerführung notwendigen Scripte in der Datenbank "Internal Database" 26 des Enablers verwaltet werden und wie die Daten der Datenbank 8 synchronisiert werden.

Die erfindungsgemäße Datenbanksynchronisierung wird anhand Figur 4 veranschaulicht. Im linken Teil der Figur ist ein erfindungsgemäßes System 1 schematisch dargestellt, welches über ein Datenbank- und Applikationsinterface (DAPI) 20 mit der Datenbank 8 des zu implementierenden bzw. des zu erweiternden Point-of-Service-Systems 9 verbunden ist.

Erfindungsgemäß werden lediglich die für den Betrieb des Point-of-Service-Systems mittels der mit dem Enabler 2 verbundenen Mobilteile relevanten Daten bzw. Tabellen aus der Datenbank 9 des zu implementierenden bzw. des zu erweiternden Point-of-Service-Systems importiert, an die Mobilteile weitergeleitet und synchronisiert; für den Betrieb des Point-of-Service-Systems nicht relevante und in der Datenbank des Point-of-Service-Systems gespeicherte Daten, wie beispielsweise Kundenanschriften, Statistiken, Verwaltungsdaten, Preis- und Umsatzdaten werden in vorteilhafter Weise vom Enabler 2 nicht importiert und auch nicht synchronisiert.

Dies wird anhand Figur 4 für den Fall eines Point-of-Service-Systems zur Zutrittskontrolle in ein Stadion veranschaulicht, dessen Datenbank viele Datenbanktabellen 27 umfasst. Gemäß der Erfindung werden zum Betrieb des Point-of-Service-Systems zur Zutrittskontrolle mittels der mit dem Enabler 2 verbundenen Mobilteile, pro Endkunden, d.h. pro zahlenden Zuschauer beispielhaft lediglich vier Daten in einer Tabelle benötigt, nämlich User_ID, Event_ID, Sitz/Sektor und Zutritt erfolgt oder nicht, wobei lediglich nur die Entität "Zutritt erfolgt oder nicht" mit der Datenbank des Point-of-Service-Systems synchronisiert werden muss.

Die Synchronisation der Daten, die über die Mobilteile eingegeben werden, beispielsweise für den Fall eines Point-of-Service-Systems zur Zutrittskontrolle der Entität "Zutritt erfolgt oder nicht" mit der Datenbank 8 des zu implementierenden bzw. des zu erweiternden Point-of-Service-Systems 9 wird vom Enabler 2 verwaltet, wobei die Dynamik der Synchronisierung von der Brisanz der Daten abhängig ist, wie bereits erläutert.

Durch die erfindungsgemäße Konzeption wird ein System zur Verfügung gestellt, welches als eine mobile Komplettlösung in bestehende Point-of-Service Systeme integriert werden kann um diese bei größtmöglicher Flexibilität zu erweitern; zudem reicht zur Implementierung eines Point-of-Service Systems eine vom Betreiber des Point-of-Service Systems zur Verfügung gestellte Datenbank, mit der das erfindungsgemäße System verbunden wird.

Für die Betreiber der Point-of-Service Systeme entsteht zudem der Vorteil, dass sie auf eine mobile Komplettlösung zugreifen können, ohne eigenes Entwicklungrisiko eingehen zu müssen, wobei die Komponenten des Systems, insbesondere die Mobilteile gebrandet werden können, wodurch die eigene Produktlinie auf einfache Weise erweitert werden kann.

Das erfindungsgemäße System kann zur Zutrittskontrolle für Personen und/oder Fahrzeuge, zum Funkbonieren in der Gastronomie, zum Verkauf von Waren und zum Anbieten von Dienstleistungen im Allgemeinen verwendet werden.

## Patentansprüche

1. System (1) zur Implementierung und/oder zur Erweiterung eines Point-of-Service-Systems, **dadurch gekennzeichnet, dass** es zumindest einen zentralen Server (Enabler) (2), und eine Mehrzahl von mit dem Enabler (2) drahtlos oder über ein Netzwerkkabel verbindbaren Mobilteilen (3, 4, 5, 6, 7) umfasst, wobei der zumindest eine Enabler (2) eine Schnittstelle zu einer Datenbank (8) mindestens eines zu implementierenden bzw. zu erweiternden Point-of-Service-Systems (9) aufweist, wobei vom Enabler (2) von der Datenbank (8) des zu implementierenden bzw. des zu erweiternden Point-of-Service-Systems (9) lediglich die Tabellen importiert, an die Mobilteile (3, 4, 5, 6, 7) weitergeleitet und synchronisiert werden, welche von den Mobilteilen (3, 4, 5, 6, 7) zum Betrieb des Point-of-Service-Systems benötigt bzw. mittels der Mobilteile (3, 4, 5, 6, 7) eingegeben werden, wobei die Synchronisationsintervalle von der Brisanz der Daten, d.h. von der Notwendigkeit der Verfügbarkeit der Daten in der Datenbank (8) des zu implementierenden bzw. zu erweiternden Point-of-Service-Systems zur Gewährleistung eines optimalen Betriebs des Point-of-Service-Systems abhängig sind.

2. System (1) zur Implementierung und/oder zur Erweiterung eines Point-of-Service-Systems, nach Anspruch 1, **dadurch gekennzeichnet, dass** der zumindest eine Enabler (2) mehrere Schnittstellen zu unterschiedlichen Datenbanken aufweisen kann, die jeweils einem zu implementierenden bzw. zu erweiternden Point-of-Service-System zugeordnet sind.

3. System (1) zur Implementierung und/oder zur Erweiterung eines Point-of-Service-Systems, nach Anspruch 2, **dadurch gekennzeichnet, dass** der Enabler (2) gleichzeitig mit mehreren Datenbanken verbunden ist, die jeweils unterschiedlichen Point-of-Service-Systemen entsprechen, wobei die Mobilteile (3, 4, 5, 6, 7) zwischen den Point-of-Service-Systemen aufgeteilt sind oder wobei der Bediener des jeweiligen Mobilteils (3, 4, 5, 6, 7) je nach Bedarf zwischen den unterschiedlichen Point-of-Service-Systemen umschalten kann.

4. System (1) zur Implementierung und/oder zur Erweiterung eines Point-of-Service-Systems, nach Anspruch 1, 2 oder 3, **dadurch gekennzeichnet, dass** die Mobilteile (3, 4, 5, 6, 7) eine CPU, Speichermittel sowie ein Betriebssystem und eine als Touch-Screen ausgeführte Anzeigevorrichtung aufweisen, wobei die auf jedes Mobilteil übertragenen bzw. zu übertragenden Daten vom Enabler (2) verwaltet werden.

5. System (1) zur Implementierung und/oder zur Erweiterung eines Point-of-Service-Systems, nach Anspruch 4, **dadurch gekennzeichnet, dass** die Mobilteile (3, 4, 5, 6, 7) modular aufbaubar ausgeführt sind, um den Anforderungen unterschiedlicher Point-of-Service-Systeme zu genügen und ein RFID- bzw. NFC-Modul zum Auslesen von Zutrittsberechtigungen, ein ein- oder zweidimensionales Barcode-Modul, ein Bluetooth-Modul zur Kommunikation mit Druckern und/oder Signalgebern, einen USB-Anschluss, einen Magnetkartenleser und/oder zumindest einen Biometriesensor aufweisen.

6. System (1) zur Implementierung und/oder zur Erweiterung eines Point-of-Service-Systems, nach Anspruch 5, **dadurch gekennzeichnet, dass** die unterschiedlichen Module in der Unterschale der Mobilteile (3, 4, 5, 6, 7) angeordnet bzw. anordenbar sind, so dass durch Änderung der Unterschale in Abhängigkeit der Anforderungen der Point-of-Service-Systeme die entsprechenden Module zur Verfügung gestellt werden können.

7. System (1) zur Implementierung und/oder zur Erweiterung eines Point-of-Service-Systems, nach einem der vorangehenden Ansprüche, **dadurch gekennzeichnet, dass** die Verbindung der Mobilteile (3, 4, 5, 6, 7) mit dem Enabler (2) über eine vom Enabler (2) verwaltete Funk-Infrastruktur erfolgt, welche als WLAN und/oder GPRS/3G Infrastruktur ausgeführt sein kann, wobei für den Fall einer GPRS/3G Funkinfrastruktur entweder ein Match-Making-Server (19), der über das Internet ein Routing der Mobilteile (6, 7) zu einem Enabler (2) ermöglicht, oder ein im Internet abrufbarer speziellen Enabler vorgesehen ist, welcher die Daten zu einem Enabler (2) eines Point-of-Service-Systems routet.

8. System (1) zur Implementierung und/oder zur Erweiterung eines Point-of-Service-Systems, nach einem der vorangehenden Ansprüche, **dadurch gekennzeichnet, dass** der Enabler (2) folgende Komponenten umfasst:
- ein Datenbank- und Applikationsinterface (DAPI) (20), über das er mit der Datenbank (8) des zu implementierenden bzw. des zu erweiternden Point-of-Service-Systems (9) verbunden ist, wobei über das Datenbank- und Applikationsinterface (20) und über ein im Enabler (2) installiertes Modul "Enabler-Configuration Service" (21) die Synchronisationsintervalle der Datenbank und weitere Einstellungen des Enablers (2) bzw. des Systems (1) vorgenommen werden;
- eine Synchronisations-Engine (23), welche die Synchronisierung der Daten zwischen den Mobilteilen (3, 4, 5, 6, 7) und der Datenbank (8) des Point-of-Service-Systems (9) übernimmt;
- eine Einstellungsdatenbank (Settings Database) (24), über die die Synchronisationsintervalle, die über das Modul "Enabler-Configuration Service" (21) eingestellt werden sowie die Einstellungen der angeschlossenen Mobilteile und des Enablers (2) bzw. des Systems (1) verwaltet werden;
- eine "Device Database" (Geräte-Datenbank) (25), über die die am Enabler (2) angemeldeten Mobilteile, die Funkinfrastruktur sowie das Finden von Mobilteilen, die sich in einer GPRS/3G Infrastruktur befinden, verwaltet werden, wobei in der "Device Data Base" (25) die Sicherheits Token, Firmware und Scripte gespeichert sind, um die Verfügbarkeit im Falle eines Updates/Austausches zu gewährleisten; und eine "Internal Database" 26 zum Speichern von sicherheitsrelevanten Daten und Einstellungen, wie von Hashes der Schlüssel, von Lizenzen für die Nutzung der Mobilteile sowie von speziellen Synchronisationseinstellungen, wobei die zur Benutzerführung notwendigen Scripte in der "Internal Database" (26) des Enablers verwaltet werden und so wie die Daten der Datenbank (8) synchronisiert werden.

9. Verfahren zur Implementierung und/oder zur Erweiterung eines Point-of-Service-Systems, **dadurch gekennzeichnet, dass** mittels zumindest eines zentralen Servers (Enablers) (2), mit dem mehrere eine CPU, Speichermittel sowie ein Betriebssystem und eine als Touch-Screen ausgeführte Anzeigevorrichtung aufweisende Mobilteile (3, 4, 5, 6, 7) drahtlos oder über ein Netzwerkkabel verbindbar sind, eine Verbindung zu einer Datenbank (8) mindestens eines zu implementierenden bzw. zu erweiternden Point-of-Service-Systems (9) hergestellt wird, wobei vom Enabler (2) lediglich die Tabellen der Datenbank (8) importiert, an die Mobilteile (3, 4, 5, 6, 7) weitergeleitet und synchronisiert werden, die von den Mobilteilen (3, 4, 5, 6, 7) zum Betrieb des Point-of-Service-Systems benötigt bzw. mittels der Mobilteile (3, 4, 5, 6, 7) eingegeben werden, wobei die Synchronisationsintervalle von der Brisanz der Daten, d.h. von der Notwendigkeit der Verfügbarkeit der Daten in der Datenbank (8) des zu implementierenden bzw. zu erweiternden Point-of-Service-Systems (9) zur Gewährleistung eines optimalen Betriebs des Point-of-Service-Systems abhängig sind, wobei die auf jedes Mobilteil (3, 4, 5, 6, 7) übertragenen bzw. zu übertragenden Daten vom Enabler (2) verwaltet werden und wobei die Mobilteile (3, 4, 5, 6, 7) der Interaktion des Point-of-Service ― Systems mit den Endkunden dienen.

10. Verfahren zur Implementierung und/oder zur Erweiterung eines Point-of-Service-Systems, nach Anspruch 9, **dadurch gekennzeichnet, dass** der zumindest eine Enabler (2) über Schnittstellen mit unterschiedlichen Datenbanken, die jeweils einem zu implementierenden bzw. zu erweiternden Point-of-Service-System zugeordnet sind, gleichzeitig oder sequentiell verbunden wird, wobei die Mobilteile (3, 4, 5, 6, 7) zwischen den unterschiedlichen Point-of-Service-Systemen aufgeteilt sind oder wobei der Bediener des jeweiligen Mobilteils (3, 4, 5, 6, 7) je nach Bedarf zwischen den unterschiedlichen Point-of-Service-Systemen umschalten kann.

11. Verfahren zur Implementierung und/oder zur Erweiterung eines Point-of-Service-Systems, nach Anspruch 9 oder 10, **dadurch gekennzeichnet, dass** die Mobilteile (3, 4, 5, 6, 7) modular aufbaubar ausgeführt sind, um den Anforderungen unterschiedlicher Point-of-Service-Systeme zu genügen, wobei durch Änderung der Unterschale der Mobilteile, in der die benötigten Module angeordnet sind, die entsprechenden Module zur Verfügung gestellt werden.

12. Verfahren zur Implementierung und/oder zur Erweiterung eines Point-of-Service-Systems, nach Anspruch 9, 10 oder 11, **dadurch gekennzeichnet, dass** die Verbindung der Mobilteile (3, 4, 5, 6, 7) mit dem Enabler (2) über ein Netzwerkkabel oder über eine vom Enabler (2) verwaltete Funk-Infrastruktur erfolgt, welche als WLAN und/oder GPRS/3G Infrastruktur ausgeführt sein kann, wobei für den Fall einer GPRS/3G Funkinfrastruktur entweder ein Match-Making-Server (19), der über das Internet ein Routing der Mobilteile (6, 7) zu einem Enabler (2) ermöglicht, oder ein im Internet abrufbarer speziellen Enabler vorgesehen ist, welcher die Daten zu einem Enabler (2) eines Point-of-Service-Systems routet.

13. Verfahren zur Implementierung und/oder zur Erweiterung eines Point-of-Service-Systems, nach Anspruch 9, 10, 11 oder 12, **dadurch gekennzeichnet, dass** es zum Betreiben eines Systems nach einem der Ansprüche 1-8 durchgeführt wird.

14. Verwendung eines Systems nach einem der Ansprüche 1-8 zur Implementierung und/oder zur Erweiterung eines Point-of-Service-Systems zur Zutrittskontrolle für Personen und/oder Fahrzeuge, zum Funkbonieren in der Gastronomie, zum Verkauf von Waren und zum Anbieten von Dienstleistungen.
